# EUROPEAN PATENT APPLICATION

(11) **EP 4 071 851 A1**
(43) Date of publication of application: **12.10.2022**
(21) Application number: 20883010.9
(22) Date of filing: 28.02.2020
(51) Int. Cl.: H01M 4/36, H01M 4/505, H01M 4/525

(54) **LITHIUM-ION BATTERY POSITIVE ELECTRODE MATERIAL AND PREPARATION METHOD THEREFOR**

(30) Priority: 29.10.2019 CN 201911039364
(71) Applicant: SVOLT ENERGY TECHNOLOGY CO., LTD, Changzhou, Jiangsu 213200 (CN)
(72) Inventor: JIANG, Weijun, hangzhou, Jiangsu 213200 (CN); QIAO, Qiqi, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN)
(74) Representative: VKK Patentanwälte PartG mbB
(86) International application number: PCT/CN2020/077168
(87) International publication number: WO 2021/082313

(57) **Abstract**

The present application proposes a positive electrode material for lithium-ion batteries and preparation method thereof. The positive electrode material for lithium-ion batteries includes LiₓNiₐMn_{b}O₂, wherein 1<x<1.10, 1:1<a:b<19:1, and a+b=1. The positive electrode material is monocrystalline particles. The positive electrode material for lithium-ion batteries proposed in the present application, i.e., a cobalt-free nickel-manganese monocrystalline positive electrode material is able to form a stable solid electrolyte film on the surface during the initial charge and discharge process. Furthermore, unlike polycrystalline particles, the cobalt-free nickel-manganese monocrystalline positive electrode material will not generate new grain boundary interfaces nor undergo side reactions when being subjected to shrinkage and expansion in the later cyclic charge and discharge process. As a result, the gas production is reduced and the cycling stability of material is enhanced.

## Description

### PRIORITY INFORMATION

This application is based upon and claims priority to Chinese Patent Application No: 201911039364.X, filed with China National Intellectual Property Administration on October 29, 2019, the entire contents of which are incorporated herein by reference.

### TECHNICAL FIELD

The present application relates to the technical field of lithium-ion batteries, and in particular, the present application relates to a positive electrode material for lithium-ion batteries and a preparation method thereof.

### BACKGROUND

Cobalt-free nickel-manganese positive electrode materials possess the advantages of high energy density, low cost, and being less limited by resources, and have become a research hotspot in recent years. However, studies have shown that cobalt-free polycrystalline positive electrode materials contain a high amount of residual alkali, exhibit poor cycle life, and undergo a side reaction with electrolyte , which causes serious problems such as gas production.

### SUMMARY

The present application is accomplished based on the following findings of the inventors:
In order to solve the above-mentioned technical problems existing in cobalt-free nickel-manganese polycrystalline positive electrode materials, the inventors of the present application have prepared a cobalt-free nickel-manganese monocrystalline structural positive electrode material, which concurrently diminishes residual alkali and reduces gas production. Furthermore, the use of the cobalt-free nickel-manganese monocrystalline structural positive electrode material can also increase the charge cutoff voltage, thereby enhancing the capacity of lithium-ion batteries.

In the first aspect of the present application, a positive electrode material for lithium-ion batteries is proposed.

According to an embodiment of the present application, the positive electrode material includes LiₓNiₐMn_{b}O₂, wherein 1<x<1.10, 1:1<a:b<19:1, and a+b=1. The positive electrode material is monocrystalline particles.

The inventors have conducted research and found that the positive electrode material of the embodiment of the present application, i.e., the cobalt-free nickel-manganese monocrystalline positive electrode material is able to form a stable solid electrolyte film on the surface during the initial charge and discharge process. Furthermore, unlike polycrystalline particles, the cobalt-free nickel-manganese monocrystalline positive electrode material will not generate new grain boundary interfaces nor undergo side reactions when being subjected to shrinkage and expansion in the later cyclic charge and discharge process, such that in favour of reducing the gas production and enhancing the cycling stability of material.

In addition, according to the above-mentioned embodiment of the present application, the positive electrode material may further possess the following additional technical features:
According to the embodiment of the present application, the positive electrode material has a core-shell structure, the inner core of the core-shell structure is formed by LiₓNiₐMn_{b}O₂, and the inner core is a monocrystalline particle.

According to the embodiment of the present application, a particle size of the monocrystalline particles is 1 micron to 5 microns.

According to the embodiment of the present application, a ratio of peak values of the characteristic peak I₀₀₃ to the characteristic peak I₀₀₄ of the monocrystalline particles is greater than 1.2.

According to the embodiment of the present application, a=0.75 and b=0.25.

According to the embodiment of the present application, an outer shell of the core-shell structure is formed by at least one of titanium dioxide and aluminum oxide.

In the second aspect of the present application, a method for preparing the above-mentioned positive electrode material is proposed.

According to an embodiment of the present application, the method includes: (1) mixing lithium hydroxide and nickel-manganese hydroxide to obtain a mixture; (2) performing a first high-temperature calcination on the mixture, and crushing the resulting mixture to obtain monocrystalline particles.

Through research, the inventors have found that the implementation of the preparation method of the embodiment of the present application can yield the cobalt-free nickel-manganese monocrystalline structural positive electrode material. Furthermore, the preparation method involves simple operations, high yield, and potential for large-scale industrialization.

In addition, according to the above-mentioned embodiment of the present application, the preparation method may further have the following additional technical features:
According to the embodiment of the present application, the nickel-manganese hydroxide is NiₐMn_{b}(OH)₂, wherein 0.5<a<0.95 and 0.05<b<0.5. The molar ratio of Ni plus Mn to Li in the mixture is 1.00 to 1.15.

According to the embodiment of the present application, the first high-temperature calcination is carried out at 800 degrees Celsius to 950 degrees Celsius for 8 hours to 12 hours.

According to the embodiment of the present application, the method further includes: (3) coating the monocrystalline particles with titanium dioxide and aluminum oxide to obtain the positive electrode material with a core-shell structure.

Additional aspects and advantages of the present application will be partially present in the following description, and the rest will become apparent from the following description or can be learned from the implementation of the present application.

### BRIEF DESCRIPTION OF THE DRAWINGS

The descriptions of the embodiments are explained from the aspects of the present application described above with reference to the following drawings.
FIG. 1 is an electron backscatter diffraction (EBSD) image (a) and a scanning electron microscope (SEM) image (b) of a cobalt-free nickel-manganese polycrystalline structural positive electrode material;
FIG. 2 is an EBSD image (a) and an SEM image (b) of the cobalt-free nickel-manganese monocrystalline structural positive electrode material according to an embodiment of the present application;
FIG. 3 shows a comparison of electron microscope (EM) images of a nickel-manganese polycrystalline structural positive electrode material (a) and a nickel-manganese monocrystalline structural positive electrode material (b) after rolling compaction;
FIG. 4 is a schematic structural diagram showing a cross section of the positive electrode material with a core-shell structure according to an embodiment of the present application;
FIG. 5 shows a comparison of EM images of a nickel-manganese polycrystalline structural positive electrode material (a) and a nickel-manganese monocrystalline structural positive electrode material (b) after coating;
FIG. 6 is an X-ray diffraction (XRD) pattern of the nickel-manganese monocrystalline structural positive electrode material according to an embodiment of the present application;
FIG. 7 shows a comparison of EM images of a nickel-manganese polycrystalline structural positive electrode material (a) and a nickel-manganese monocrystalline structural positive electrode material (b) after cycling;
FIG. 8 shows a comparison of cycle curves of a polycrystalline structural positive electrode material and a monocrystalline structural positive electrode material at room temperature;
FIG. 9 shows a comparison of cycle curves of a polycrystalline structural positive electrode material and a monocrystalline structural positive electrode material at 45 degrees Celsius;
FIG. 10 is a comparison diagram showing gas yields of a full battery with a polycrystalline structural positive electrode material and a full battery with a monocrystalline structural positive electrode material;
FIG. 11 is a comparison diagram showing compaction densities of an electrode laminate of a polycrystalline structural positive electrode material and an electrode laminate of a monocrystalline structural positive electrode material;
FIG. 12 is a schematic flowchart showing the method for preparing the positive electrode material according to an embodiment of the present application.

### Reference signs

100 inner core
200 outer shell

### DETAILED DESCRIPTION OF THE EMBODIMENTS

The embodiments of the present application are described in detail below, and those skilled in the art will understand that the following embodiments are intended to be used to explain the present application and should not be regarded as limitations of the present application. Unless otherwise specified, specific techniques or conditions that are not explicitly described in the following embodiments may be selected by those skilled in the art according to common techniques or conditions in the field or product manual.

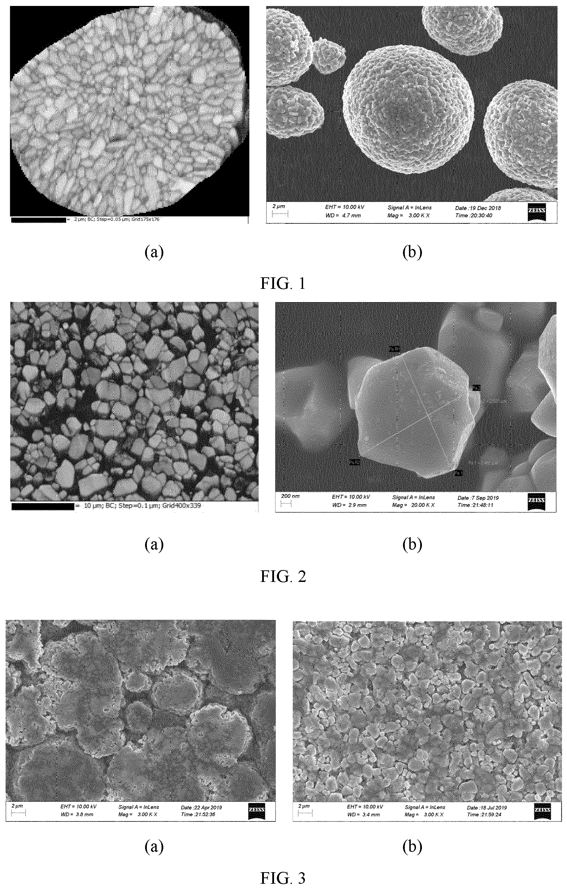

In one aspect of the present application, a positive electrode material for lithium-ion batteries is proposed. According to an embodiment of the present application, the positive electrode material includes LiₓNiₐMn_{b}O₂, wherein I<x<1.10, 1:1<a:b<19:1, and a+b=1. The positive electrode material is monocrystalline particles. The inventors of the present application have found from long-term research that a nickel-manganese layered structural positive electrode material generally has a structure with polycrystalline morphology, and an electron backscatter diffraction (EBSD) image thereof can refer to FIG. 1(a). The positive electrode material particles are secondary particles consisting of polycrystalline structure, and a grain size thereof ranges from 100 nanometers to 400 nanometers. Moreover, the nickel-manganese layered structural material generally contains a nickel content of more than 50% and thus readily undergoes a side reaction with electrolyte to product gas. Furthermore, after a common polycrystalline granular material is subjected to a long-term cycling, the secondary particles thereof are prone to rupture, thereby leading to an accelerated attenuation of cycle performance.

Although the gas production and cycle life can be improved by coating technology, an scanning electron microscope (SEM) image of the polycrystalline structural nickel-manganese layered positive electrode material can refer to FIG. 1(b), and the secondary particles have dense internal grain boundaries, such that the secondary particles cannot be effectively coated. Therefore, the coating process only occurs on the surface of the positive electrode material. During the charge and discharge process, the volume of crystals varies with crystal shrinkage and expansion, resulting in an inevitable separation of polycrystalline materials after a long-term cycling. Furthermore, new grain boundary interfaces constantly undergo a side reaction with electrolyte, thereby causing an accelerated capacity decay.

In view of the technical problems existing in the polycrystalline structure, the inventors of the present application have designed the positive electrode material for lithium-ion batteries as monocrystalline particles, with the crystal structure remaining a layered structure and belonging to the hexagonal crystal family (R3m space point group). Specifically, the cobalt-free nickel-manganese monocrystalline structural positive electrode material can be prepared by adjusting the high-temperature calcination process and the composition ratio of compounds. Referring to FIG. 2(a), the EBSD image shows that the positive electrode material particle is formed by a single monocrystalline structure, and referring to FIG. 2(b), the SEM image indicates that the monocrystalline structural positive electrode material is a primary particle. As such, a coating layer can be advantageously uniformly coated on the surface of the particle, which thereby can significantly reduce the side reaction between the positive electrode material and electrolyte during the charge and discharge process.

Furthermore, referring to FIG. 3, a cobalt-free nickel-manganese monocrystalline structural positive electrode material (such as FIG. 3(b)) can bear a larger pressure without break than a nickel-manganese polycrystalline structural positive electrode material (such as FIG. 3 (a)), thereby increasing the density of electrode laminate, which in turn enhances the energy density of lithium-ion battery cell.

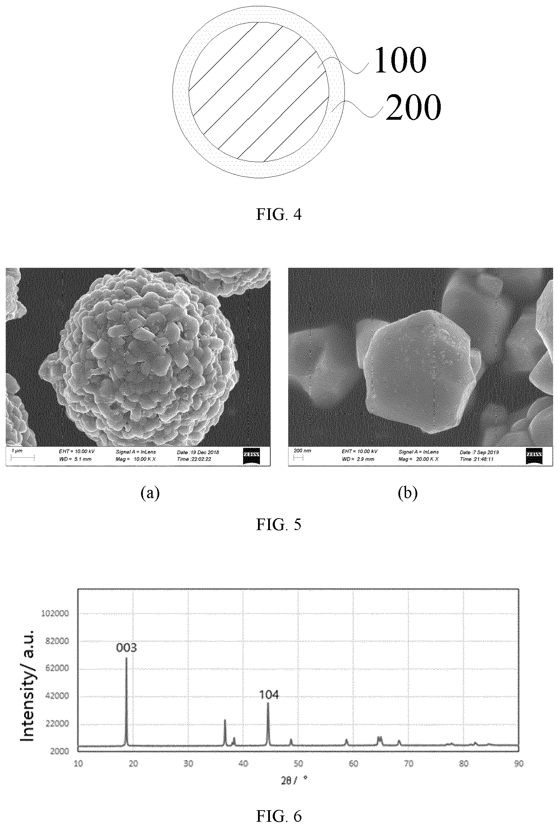

In some embodiments of the present application, referring to FIG. 4, the positive electrode material may have a core-shell structure. In this configuration, an inner core 100 of the core-shell structure may be formed by LiₓNiₐMn_{b}O₂, and the inner core 100 is a monocrystalline particle. In this configuration, the outer surface of the cobalt-free nickel-manganese monocrystalline structural positive electrode material is coated with an outer shell 200, which can further improve the problems of gas production and short cycle life. Specifically, the comparison images of the nickel-manganese polycrystalline structural positive electrode material and the nickel-manganese monocrystalline structural positive electrode material after coating can refer to FIG. 5, which indicates a large quantity of particle rupture occurs in the polycrystalline particles while the monocrystalline particles basically maintain the original morphology.

In some specific examples, the particle size of the monocrystalline particles as the primary particles may be 1 micron to 5 microns, that is, the diameter of the inner core 100 may be 1 micron to 5 microns. In this configuration, referring to FIG. 2, the size of the primary particles is about 1 micron to 3 microns, and there is no grain boundary or adhesion between the particles, so that the strength of the cobalt-free nickel-manganese monocrystalline structural positive electrode material is enhanced, which further increases the energy density of lithium-ion batteries.

In some specific examples, referring to FIG. 6, the ratio of peak values of the characteristic peak I₀₀₃ to the characteristic peak I₀₀₄ of the monocrystalline particles may be greater than 1.2. In this configuration, even if the nickel-manganese monocrystalline structural positive electrode material is not added with cobalt element, the layered structure can also be strengthened.

In some embodiments of the present application, a=0.75 and b=0.25, that is, the positive electrode material includes LiₓNi_{0.75}Mn_{0.25}O₂, or the inner core 100 is formed by LiₓNi_{0.75}Mn_{0.25}O₂. In this configuration, the raw materials (such as LiOH and Li₂CO₃) in the inner core 100 of the positive electrode material have a total content of 0.05 wt% to 0.6 wt%, and the primary particle has the specific surface area of 0.2 m²/g to 1.0 m²/g, the PH of 11 to 12, the tap density of greater than or equal to 1.5 g/cm³, the apparent density of greater than or equal to 1.0 g/cm³, the moisture content of less than or equal to 1000 ppm, and the magnetic substance impurities of less than or equal to 300 ppb.

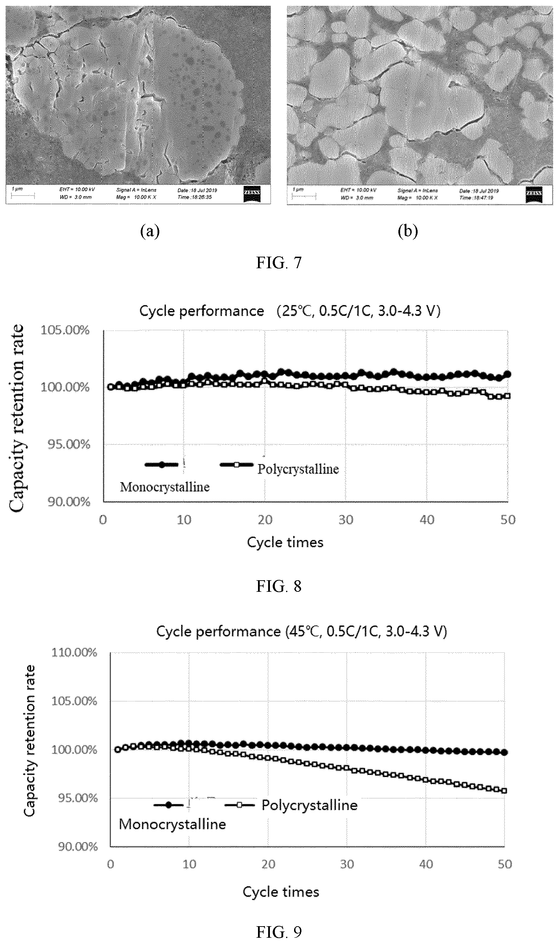

Moreover, the cobalt-free nickel-manganese polycrystalline structural positive electrode material and the cobalt-free nickel-manganese monocrystalline structural positive electrode material are made into positive electrode laminates which are then assembled into batteries. Subsequently, the batteries are subjected to 50 periods of cycling at room temperature and EM images of the positive electrode material particles are shown in FIG. 7. It is apparent that the secondary particles of the polycrystalline structure (such as FIG. 7(a)) internally rupture after cycling operation while the primary particles of the monocrystalline structure (such as FIG. 7(b)) do not rupture.

In addition, the cobalt-free nickel-manganese polycrystalline structural positive electrode material and the cobalt-free nickel-manganese monocrystalline structural positive electrode material are respectively made into positive electrode laminates which are then assembled into batteries. Subsequently, the batteries are subjected to a cycle performance test at 25 degrees Celsius and 45 degrees Celsius, respectively, and the results thereof are shown in FIG. 8 and FIG. 9, respectively. Obviously, the comparison of cycle curves at room temperature shown in FIG. 8 indicates that the 50-cycle capacity retention rate of the monocrystalline structure is 101.1% and the 50-cycle capacity retention rate of the polycrystalline structure is 99.2%. The comparison of cycle curves at 45 degrees Celsius shown in FIG. 9 indicates that the 50-cycle capacity retention rate of the monocrystalline structure is 99.7% and the 50-cycle capacity retention rate of the polycrystalline structure is only 95.7%. Therefore, the cycle performance, especially the high-temperature cycle performance, of the cobalt-free monocrystalline positive electrode material prepared in the present application is superior to that of polycrystalline positive electrode material.

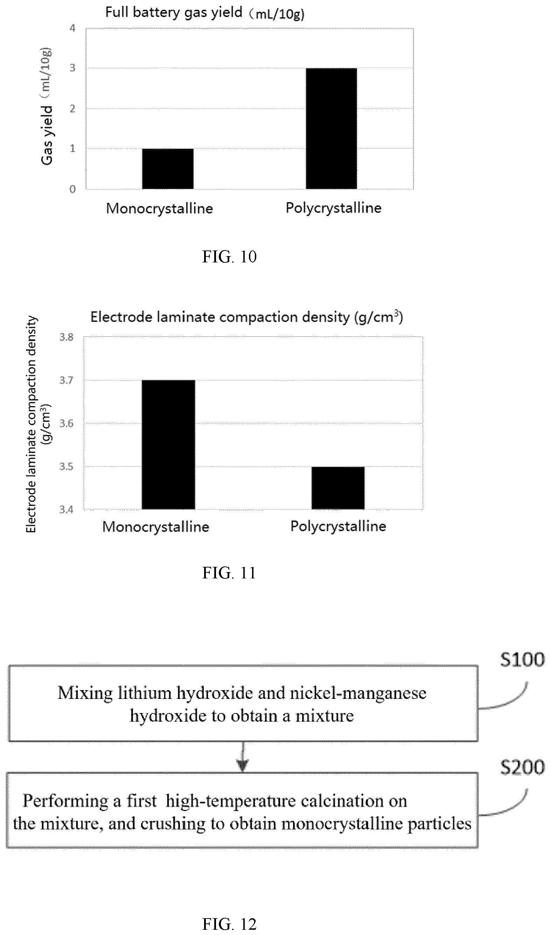

Furthermore, referring to FIG. 10, the comparison of gas yields of full batteries is conducted in full pouch cells, the gas yield of the monocrystalline structural positive electrode material is significantly lower than that of the polycrystalline structure, which is only 1/3 of the gas yield of the polycrystalline structure. Referring to FIG. 11, the compaction density of the electrode laminate of the cobalt-free nickel-manganese monocrystalline structural positive electrode material can reach 3.7 g/cm³, and the compaction density of the electrode laminate of the polycrystalline structure is only 3.5 g/cm³.

In summary, according to the embodiments of the present application, a positive electrode material is proposed, which is a cobalt-free nickel-manganese monocrystalline positive electrode material. During the initial charge and discharge process, a stable solid electrolyte film is formed on the surface. Unlike polycrystalline particles, the monocrystalline positive electrode material will not produce new grain boundary interfaces nor undergo side reactions due to shrinkage and expansion in the later cyclic charge and discharge process. As such, the gas production is reduced and the cycle stability of material is enhanced.

In another aspect of the present application, a method for preparing the above-mentioned positive electrode material is proposed. According to an embodiment of the present application, referring to FIG. 12, the preparation method includes:
S100: mixing lithium hydroxide and nickel-manganese hydroxide to obtain a mixture.

In this step, lithium hydroxide (LiOH) is selected as the lithium source, nickel-manganese hydroxide with a D50 particle size of 1 micron to 4 microns is selected as nickel and manganese sources, a mixture is obtained after thorough mixing. In some embodiments of the present application, the nickel-manganese hydroxide is NiₐMn_{b}(OH)₂, wherein 0.5<a<0.95 and 0.05<b<0.5, and the molar ratio of Ni plus Mn to Li in the mixture is 1.00 to 1.15. In this way, a cobalt-free nickel-manganese monocrystalline structural positive electrode material is prepared from the mixture at the elements ratio described above by the subsequent high-temperature calcination.

S200: conducting a first high-temperature calcination on the mixture, and crushing the resulting mixture to obtain monocrystalline particles.

In this step, the mixture in step S100 is subjected to the first high-temperature calcination, and then the resulting mixture is crushed by mechanical milling or jet milling, so that a monocrystalline particle product with a particle size of 1 micron to 4 microns can be obtained. In some embodiments of the present application, the first high-temperature calcination is carried out at 800 degrees Celsius to 950 degrees Celsius for 8 hours to 12 hours, so that the yield of the monocrystalline structure can be increased and the rolling resistance of the positive electrode material can be improved.

In some embodiments of the present application, after step S200, the preparation method may further include:
S300: coating the monocrystalline particles with titanium dioxide and aluminum oxide to obtain the positive electrode material with a core-shell structure.

In this step, the monocrystalline particles obtained in step S200 may be further coated with at least one of nano-titanium dioxide (TiO₂) and nano-aluminum oxide (Al₂O₃), and the contents of Ti and Al coated may be 0.1 wt% to 0.5 wt% and 0.05 wt% to 0.3 wt%, respectively. In this way, positive electrode material particles with lower gas production and longer cycle life can be obtained.

In some embodiments of the present application, the coating treatment may include the steps of a solution coating and a second high-temperature calcination. The second high-temperature calcination may be performed at 500 degrees Celsius to 900 degrees Celsius for 4 hours to 10 hours. The material obtained after the second high-temperature calcination is finally subjected to a 300-400 mesh sieving treatment to obtain monocrystalline structural positive electrode material particles with a size of 1 micron to 5 microns.

In summary, according to the embodiments of the present application, a preparation method is proposed to obtain the cobalt-free nickel-manganese monocrystalline positive electrode material. The preparation method involves simple operations, high yield, and potential for large-scale industrialization.

In the description of the present application, it should be understood that the terms "first " and "second " are only used for the purpose of description and cannot be interpreted as indicating or implying relative importance or implicitly indicating the quantity of technical features. Thus, a feature limited by "first " and "second " may expressly or implicitly include at least one.

In the description of the present specification, reference terms "one embodiment", "some embodiments", "example", "specific example", or "some examples", etc., mean specific features, structures, materials, or characteristics described with reference to the embodiment or example are included in at least one embodiment or example of the present application. In the present specification, schematic expressions of the above terms are not necessarily directed to the same embodiment or example. Furthermore, the specific features, structures, materials, or characteristics described can be combined in any suitable manner in any one or more embodiments or examples. In addition, those skilled in the art can combine different embodiments or examples and combine the features of different embodiments or examples described in the present specification unless there is a conflict.

Although the embodiments of the present application have been shown and described above, it should be understood that the above embodiments are exemplary and cannot be construed as limitations to the present application. Those skilled in the art can make changes, modifications, substitutions, and variations to the above embodiments within the scope of the present application.

## Claims

1. A positive electrode material for lithium-ion batteries, **characterized in that** the positive electrode material includes LiₓNiₐMn_{b}O₂, wherein 1<x<1.10, 1:1<a:b<19:1, and a+b=1, and the positive electrode material is monocrystalline particles.

2. The positive electrode material according to claim 1, **characterized in that** the positive electrode material has a core-shell structure, an inner core of the core-shell structure is formed by LiₓNiₐMn_{b}O₂, and the inner core is a monocrystalline particle.

3. The positive electrode material according to claim 1 or 2, **characterized in that** the particle size of the monocrystalline particles is 1 micron to 5 microns.

4. The positive electrode material according to claim 1 or 2, **characterized in that** the ratio of peak values of a characteristic peak I₀₀₃ to a characteristic peak I₀₀₄ of the monocrystalline particles is greater than 1.2.

5. The positive electrode material according to claim 1 or 2, **characterized in that** a=0.75 and b=0.25.

6. The positive electrode material according to claim 2, **characterized in that** an outer shell of the core-shell structure is formed by at least one of titanium dioxide and aluminum oxide.

7. A method for preparing the positive electrode material according to any one of claims 1 to 6, **characterized in that** the method includes:
(1) mixing lithium hydroxide and nickel-manganese hydroxide to obtain a mixture;
(2) performing a first high-temperature calcination on the mixture, and crushing the resulting mixture to obtain the monocrystalline particles.

8. The method according to claim 7, **characterized in that** the nickel-manganese hydroxide is NiₐMn_{b}(OH)₂, wherein 0.5<a<0.95 and 0.05<b<0.5, and a molar ratio of Ni plus Mn to Li in the mixture is 1.00 to 1.15.

9. The method according to claim 7, **characterized in that** the first high-temperature calcination is carried out at 800 degrees Celsius to 950 degrees Celsius for 8 hours to 12 hours.

10. The method according to claim 7, **characterized in that** the method further includes:
(3) coating the monocrystalline particles with titanium dioxide and aluminum oxide to obtain the positive electrode material having a core-shell structure.
